# EUROPEAN PATENT APPLICATION

(11) **EP 4 015 595 A1**
(43) Date of publication of application: **22.06.2022**
(21) Application number: 21212031.5
(22) Date of filing: 02.12.2021
(51) Int. Cl.: C09K 5/06

(54) **MACHINING COOLANT**

(30) Priority: 21.12.2020 GB 202020267
(71) Applicant: Rolls-Royce plc, London N1 9FX (GB)
(72) Inventor: Novovic, Donka, Derby, DE24 8BJ (GB); Clark, Daniel, Derby, DE24 8BJ (GB); Axinte, Dragos, Derby, DE24 8BJ (GB); Liao, Zhirong, Derby, DE24 8BJ (GB)
(74) Representative: Rolls-Royce plc

(57) **Abstract**

A coolant for a subtractive machine process, the coolant comprising a phase change material which changes from a solid state to a liquid state as a result of frictional heat generated during the subtractive machine process of the machine tool on a component to be machined, and returns to the solid state as the component cools.

## Description

### Field of the disclosure

The disclosure relates to a coolant for use in machine tool and component cooling during reduction processes. In particular, the disclosure relates to phase change materials for cooling a component and the machine tool, which can be applied as a solid to the component and turn to liquid during a subtractive machine process before returning to a solid state once cooled.

### Background of the Disclosure

It is well known that when subtractive machining certain materials and components it is important that a coolant should be applied to the workpiece and/or working tool to prevent damage to them. The machining process is often enhanced by the presence of a coolant delivery that helps maintain a low workpiece temperature and in some cases provides cooling to aid chip separation. Most of the coolants used are in liquid form and they are supplied to the workpiece as a jet or as a flood. Coolants are typically aqueous or oil-based liquids, which results in waste as the quantity of fluid applied is usually greater than the actual quantity needed. Furthermore, there are limitations in the means and ability to direct the coolant liquid to the ideal processing zone, which is part of the reason why a large quantity of coolant fluid is used as only a small fraction of the fluid flow has a useful effect. After the machining process is finished the coolant may be contaminated with media expelled from the tool or the workpiece; this can affect the design and options for reclamation and reuse of the cooling fluid. An alternative to the use of cooling fluids is to employ a dry grinding process or a minimum quantity lubrication process.

The present disclosure provides an improved coolant medium for a subtractive machining process, which overcomes at least some of the limitations of the prior art.

### Summary of the Disclosure

According to a first aspect of the disclosure there is provided a coolant for a subtractive machine process, the coolant comprising a phase change material which changes from a solid state to a liquid state as a result of frictional heat generated during the subtractive machine process of the machine tool on a component to be machined, and returns to the solid state as the component cools.

The coolant may be a deep eutectic solvent. The deep eutectic solvent may have a formula Cat⁺X⁻zY, where Cat+ is a hydrogen bond acceptor (HBA) cation, X⁻ is the corresponding halide anion and Y represents anion - interacting molecules. The coolant may further comprise a hydrogen bond donor (HBD) is choline chloride. The hydrogen bond acceptor may be chosen from one of ethylene glycol, glycerine, urea, or citric acid. The coolant may be diluted with water. The coolant may have a melting point from 5 °C to 25 °C above room temperature. Sub-zero temperature processing may be used on the component.

According to a second aspect of the disclosure there is provided a method of cooling a tool and/or a component during a subtractive machining process, the method comprising: inserting a component to be machined into a clamp associated with the tool; and applying a deep eutectic solvent as a coolant to the tool and/or the component prior to the start of the reduction machining process or during the reduction machining process.

The deep eutectic solvent melted or shed during the subtractive machining process may be collected during and after the subtractive machining process, the collected deep eutectic solvent is recycled by addition of a solvent to decrease the viscosity so that any debris from the machining process is separated before being heated to evaporate the solvent. The deep eutectic solvent may have a formula Cat⁺X⁻zY, where Cat+ is a hydrogen bond acceptor (HBA) cation, X⁻ is a corresponding halide anion and Y represents anion -interacting molecules. The hydrogen bond donor (HBD) may be choline chloride. The hydrogen bond acceptor (HBA) may be ethylene glycol, glycerine, urea, or citric acid.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

Embodiments will now be described by way of example only, with reference to the Figures, in which:
**Figure 1** is a phase change graph of an example deep eutectic solvent;
**Figure 2a** presents a schematic of the use of a phase change coolant in a grinding process;
**Figure 2b** presents an enlarged version of Figure 2a focussing on the grinding area;
**Figure 2c** presents a schematic of the use of a phase change coolant in a drilling process;
**Figures 3a****-d** show thermal imaging pictures and show a comparison of the different cooling techniques. **Figure 3a** presents a dry cutting technique, **Figure 3b** presents a flood cooling situation, **Figure 3c** presents the use of a phase change coolant with the coolant being applied to the workpiece, and **Figure 3d** presents the use of a phase change coolant with the coolant being applied to the grinding wheel;
**Figures 4a****-f** present high speed imaging of a grinding wheel traversing a workpiece with the use of phase change coolant on the workpiece; and

### Detailed Description

In order to improve the cooling and lubrication (reduce friction) during the subtractive process a fluid is typically applied to the surface and the machine tool. Liquid coolant is distributed from a nozzle, which has a restriction in the ability to get the nozzle close to the cutting tool; this results in a wastage of fluid as a large quantity of fluid needs to be added to the surface so that the drill bit and the tool can be cooled whilst the subtractive process takes place. The excess amount of coolant requires that the machine is designed to have drainage ports to capture any excess fluid that has been applied to the workpiece and the machine tool. Extra processing is then required to be done on this fluid to allow it to be used again. As such, this is a wasteful process.

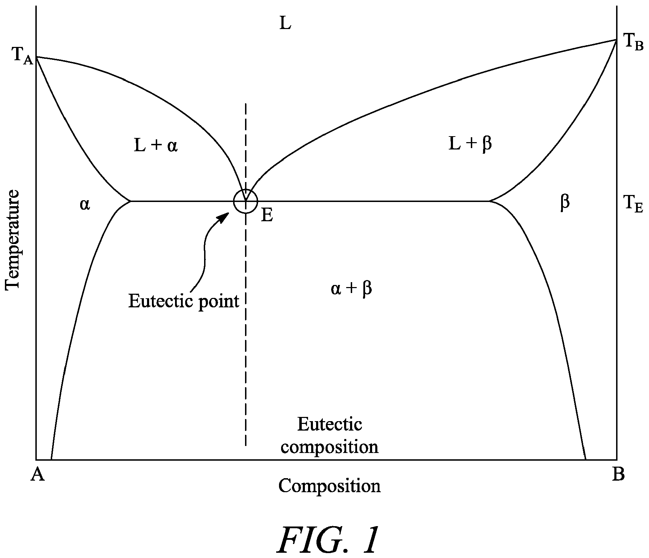

According to the present disclosure the typical liquid coolant is replaced by deep eutectic solvents or other fluid that in particular undergo phase change during processing. In a reduction process the heat generated during the reduction process is used to initiate the phase transition. The thermal gradient can also be used to localise the phase change. Deep eutectic solvents are systems formed from a eutectic mixture that melts and solidifies at a single temperature. A phase change in physical state from a solid to a liquid or liquid to a gas or the liquid to a solid or gas to a liquid through a change in temperature. These phase change materials have a melting point that is below the melting point of the material of the workpiece or machine tool, but that is greater than that of the ambient temperature of the room in which the workpiece is placed. An example phase change - melting point - of a deep eutectic solvent is shown in **Figure 1**.

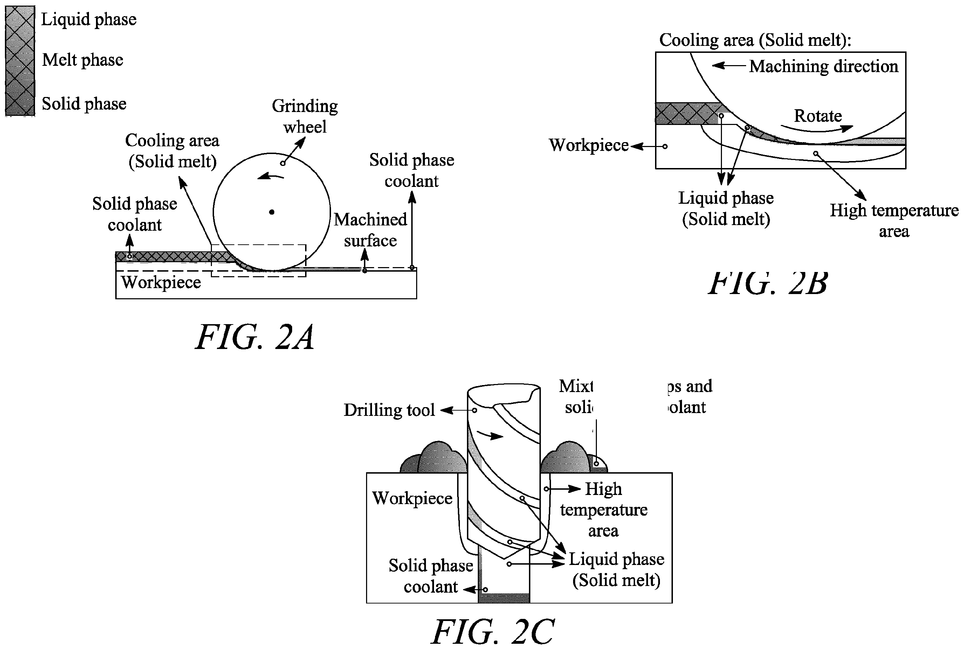

Use of such materials means the coolant is applied as a solid. Through the use of a solid it can be applied directly to the point at which the coolant is required. This results in a targeted application of the coolant. Examples of this are shown in **Figures 2a****-c** in which the coolant is applied in a solid form, as shown in **Figure 2a**. In this grinding process the coolant is applied as a solid across the area that is to be ground. As the grinding wheel contacts, the workpiece the friction resulting from this causes localised heating of the workpiece. This heating also raises the temperature of the cooling fluid so that is forms a solid melt around the workpiece as it moves. In the area where the grinding wheel has passed the workpiece cools to a level that the remaining coolant returns to solid. An enlarged cross section is shown in **Figure 2b**. In this it is shown that in the area in close vicinity to the grinding wheel most of the coolant is in its liquid phase. There is also a high temperature area of the coolant fluid in the area directly in the vicinity of the grinding wheel, where the cooling medium remains in a liquid state and provides heat extraction. **Figure 2c** shows how this works in the case of drilling a material. In this case the coolant would be applied to the surface above the point to be drilled prior to the start of the drilling process. The coolant is applied as a solid and can be applied directly on the workpiece surface, or through a pilot drilled hole.. Once the coolant has been applied the drilling process can commence. In the same way as with the grinding as the drill bit contacts the workpiece it causes a localised heating which results in the solid phase changing to a liquid phase in the area that is being drilled. The flutes of the drill can pick up the coolant along with any dispersed material. The liquid phase coolant keeps the drill bit cool. The mixture of the coolant and the waste drilling products can then build up around the drill bit. In this case, similar to the grinding case, the area around the drill bit becomes a very high temperature area. In this case the coolant had been applied to the bottom of the hole, but the same principle applies if the coolant is only applied to the surface of the workpiece. The phase change coolant can also be applied to the tool (internally through tool channels or pores or externally) that is being used whether it is a drill bit or grinding wheel or any other tool that would be apparent to the person skilled in the art.

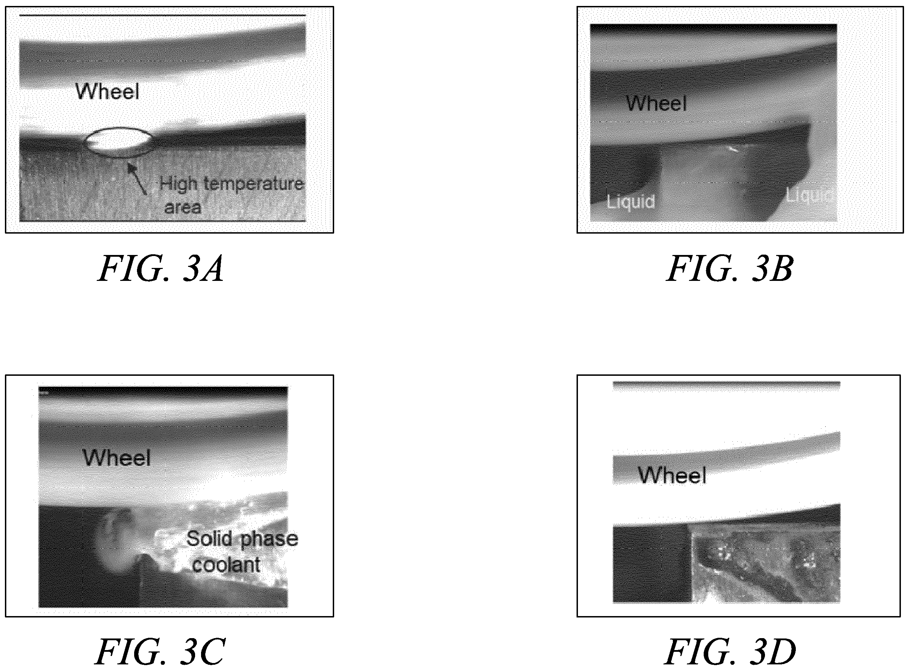

**Figure 3a****-d** show thermal imaging pictures and show a comparison of the different cooling techniques. **Figure 3a** presents a dry cutting technique. The thermal image shown in figure 3a presents a very high temperature along the grinding wheel. **Figure 3b** presents an example of same process being carried out using a traditional fluid coolant. The figure shows that the coolant is effective, as it has resulted in a lowering of the temperature of the grinding wheel and the workpiece surface, but there are still points that are at a higher elevated temperature, as the coolant could not reach all surfaces. **Figures 3c** and **3d** present examples using the phase change coolant. In Figure 3c the workpiece is covered in the phase change coolant. The figure shows that there is an increase in the grinding wheel temperature, which is greater than that for the liquid coolant, but not as great as that for the dry cutting. However, more efficient cooling properties of the phase change coolant ensure that this increased temperature does not affect the workpiece. In Figure 3d in which the phase change material is applied over the grinding wheel, in this it can be seen that there is an elevation in the temperature of the grinding wheel to be equivalent to that of the dry cutting example, but there is little elevation in the temperature of the workpiece. It has been found that the use of the phase change fluid is an improvement on a dry and cutting fluid grinding technique as it does not result in a high temperature region at the point where the wheel contacts the workpiece. In the case of the liquid coolant the coolant was applied at a pressure of 3500 kPa (35 bar), which resulted in a relatively large amount of coolant fluid being applied to keep the grinding wheel and workpiece cool. In the case as shown in Figure 3d the phase change material is most likely ejected off the grinding wheel due to the centrifugal forces acting upon it. As such the phase change coolant is typically best applied to the workpiece for grinding applications. Figures 3c and 3d also show a secondary function of coolants, which is to reduce friction between tool and the workpiece, thus reduce temperature rise in the cutting zone.

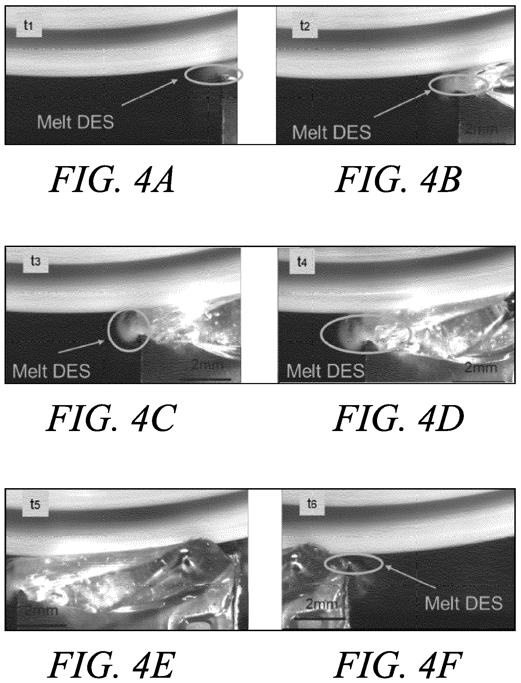

High speed imaging of the use of phase change coolant is shown in **Figures 4a****-f**. As can be seen in Figure 4a, as the grinding wheel approaches the workpiece and contacts the phase change material there is a degree of melt to the phase change coolant that forms on the front edge. As the grinding wheel contacts the workpiece the amount of melt increases forcing a greater amount of the melted phase change coolant from the surface of the workpiece as shown in Figure 4b. Figures 4c and 4d show the grinding wheel passing across the workpiece, as can be seen form the white area around the point of contact there is a degree of localised heating at the contact point. There is also a greater amount of melt material which will include the coolant and some of the material that has been removed from the grinding process. This material is ejected from the back of the grind area and is shown as a build up over the back of the workpiece. In Figure 4e the grinding wheel is shown in the centre of the component. In this figure it can be seen that the where the phase change material coolant that is not affected by the heat of the grinding wheel remains solid on the area surrounding the grind line. This means that there is less waste when compared to the fluid coolant. It means that the coolant can be collected again for easy reuse. It was also found that any of the material that was transferred to the grinding wheel was thrown from the wheel due to centrifugal force acting upon it. As the grinding wheel comes to the end of the grind length there is a melted coolant falling from the front of the workpiece, but the coolant outside of the work line is unaffected. Therefore, in this system the coolant component of the solid-state coolant is a result of the solid phase change coolant absorbing the heat energy of the subtractive machining process and using this to turn the solid phase change fluid into a liquid.

The results of the different grinding processes were assessed by looking at the surface hardness in the sample after the machining process had finished. In this study it was found that there was very little change in the surface hardness at all depths under the surface when the phase change coolant is applied to the surface of the sample. In the case of using the phase change material on the grinding wheel produces similar surface hardness results to using a high-pressure jet of coolant; this was found to be the case at all depths. In this case there was found to be a drop in the first 200-250 µm under the surface, but no real decrease after this point. In the case of the wet flood it was found that there was a similar decrease, but that this extended to a depth of about 400 µm under the surface. For the dry grinding method, the drop in the hardness values extended to around 1000 to 1200 µm before returning to normal. Therefore, the phase change coolant has less detrimental effect to the machined workpiece surface/subsurface properties.

Cross sectional imaging was also performed on the samples to look at the structure after the grinding process and to look at the surface. In the dry grinding examples, there was found to be a large amount of white layer and grain bending. There was a level of deformation present in the area closest to the surface. In the case of the wet cutting there was also a level of deformation layer and grain bending that could be observed. This method also resulted in continuous and non-continuous deformation layer being formed at the interface. In the case where the coolant is applied under a high-pressure configuration a continuous and severe deformation layer was observed in one of the scans, but not in the other. However, in both scans the sample showed a degree of grain bending that was not as extreme as in the case of using the coolant in a flood condition and especially when compared against the dry cutting configuration. In the case in which a phase change coolant was applied to the surface of the scans showed that there is a good surface finished with no discontinuous layer or grain bending and in the other scan there is a small degree of grain bending. This grain bending, where present, only occurs at a level very close to the ground surface and only extends of the order of about 1 to about 2 µm. In the example in which phase change coolant has been applied to the grinding wheel the scan images showed that there is a severe grain bending extending into the sample close to the ground surface. In both cases there is no evidence of any discontinuous separate layers being formed at the grind surface. The evidence from these scans shows that in the case where the phase change coolant is applied to the surface the coolant provides an improved approach to applying coolant to materials and that similar results to wet cutting can be obtained by applying the phase change coolant to the surface of the grinding wheel. The results show that the use of phase change coolants provides an effective means of providing the coolant, which results in good surface integrity. It is believed that this is a result of improved cooling and lubrication properties of phase change coolant, as well as a result of the coolant being accurately delivered into the entire cutting area, which is difficult using a fluid coolant.

The phase change coolant can be recycled after use. This can be done by diluting the waste phase change material in a solvent. Depending upon the material being used any suitable solvent can be used. For example, this could be water. Alternatively, it could be an organic solvent that would be well known to the person skilled in the art. By diluting the phase change material, it is able to have a higher viscosity, which allows the chip and metal particles to be separated out from it. The material can then be filtered, which separates any unwanted material, and then heated to remove any excess solvent and to return the phase change material back to a solid. This overcomes the very complex filtering processes that are required to reprocess liquid coolant that has been applied to a machine. It also removes the requirements for the collection and drainage of the coolant which is an issue when using liquid coolants.

In the examples discussed above eutectic-type mixtures were used. In these the systems deep eutectic solvents (DES) and Ionic Liquids (IL) were mixed. In the DES the mixture exhibits physical and chemical properties that are discrete from their component parts. One of the desirable properties of DES is that the melting point of the ideal composition is below the melting points of the component parts. Consequently, by controlling the mixture ratios, the melting point can be controlled such that a specific eutectic solvent can be acquired. DES are created through mixing solid precursor components at a molar ratio corresponding to the eutectic point of a given mixture, where the freezing point of the liquid, T_{f}, is depressed from that of the ideal solution. The DES is subsequently formed by heating the solid mixture. The DES systems generally consist of a quaternary ammonium salt (hydrogen bond acceptor (HBA)) and a hydrogen bond donor (HBD). The quantities of the HBA and HBD components are mixed such that the stoichiometry is close to the eutectic point of the liquid mixture. An example of such a compound would be a mixture of choline chloride and urea to form an Ionic Liquid at a 1:2 molar ratio; this is indicative of one mole of halide being complexed by two moles of urea. In such a case the freezing point depression can be correlated to hydrogen bonding between the components as well as the low lattice energy of the solid mixture, caused by the large asymmetric molecules of the HBA, which inhibit solidification and crystallisation.

DES have the common formula Cat⁺X⁻zY, where Cat+ is the HBA cation (such as a quaternary ammonium salt, R4N⁺) X⁻ is the corresponding halide anion and Y represents anion- interacting molecules. DES are currently categorised into four discrete groups (Type I-IV). Type I DES are composed of a relatively low melting point halide HBD, for example this may be ZnCl₂ and a quaternary ammonium salt (QAS) such as choline chloride. In many cases the metal halides used in Type I DES may be sensitive to airborne moisture, for example ALCl₃. Type II DES comprise a hydrated metal salt, where the water further disrupts the projected lattice and depresses the melting point. The application of hydrated metal salts allows for a wider range of metals to be employed, as these typically are insensitive to moisture. Type II DES materials comprise a QAS cation such as chlorine chloride and where the HBD is an organic component such as carboxylic acids, alcohols and sugars. It, therefore, follows that many Type III DES materials can be generated from natural products that are relatively abundant, low cost and biodegradable. Type IV DES also contain metal halides, but are discrete from type I and Type II, as they do not contain QAS cations. By the selection of specific HBD materials allows for complexed metallic cations to be formed in the solution. Examples of such HBDs are urea and acetamide which have both been used for this purpose.

Certain formulations possess physical properties that can enhance the heat transfer coefficient whilst improving lubrication properties compared with conventional emulsion-based cutting fluids. The environmental safety of these solutions is also an important consideration in terms of potential operator safety, as well as handling and eventual disposal. From these desirable characteristics, formulations have been identified to minimise the risk to the operator. The formulations have been selected as they are non-carcinogenic, non-toxic aside from deliberate ingestion, are sourced from natural products, and are biodegradable. One such formulation is based on choline chloride as the HBD, in conjunction with ethylene glycol, glycerol, urea and citric acid to provide a range of freezing points, molar heat capacities and thermal conductivities (physical properties outlined in Table 1 below). The physical properties of these formulations can be altered by dilution with water or through the addition of common non-toxic surfactants such as sodium lauryl sulfate (SLS). As the skilled person will appreciate, a number of other formulations that could be used instead.

**Table 1: physical properties of a range of different HBD**

| HBD | Composition ratio (M) ChCl:HBD | Freezing point (°C) | Viscosity (Pas) | Thermal conductivity (Wm⁻¹K⁻¹) | Molar heat capacity (Jmol⁻¹K⁻) | Density (gcm⁻³) |
|---|---|---|---|---|---|---|
| Ethylene glycol | 1:2 | -66 [35] | 0.037 [37] | 0.195‡ [103] | 190.8 [48] | 1.120 [11] |
| Glycerol | 1:2 | -35 [104] | 0.200 [42] | 0.210 [42] | 237.7 [48] | 1.187 [42] |
| Urea | 1:2 | +12 [105] | 0.859 [43] | 0.354 [106] | 181.4 [48] | 1.197 [43] |
| Citric acid | 1:2 | +69 [27] | N/A | No Data | 422 [50] | >1.120 [11] |

Two of the proposed formulations - ethylene glycol and glycerol deep eutectic mixtures - could be applied to existing conventional subtractive materials processing processes and setups. These may, however, benefit from sub-zero temperature processing because this allows mixtures that stay liquid below ambient temperature to be used to extract more heat per volume. For conventional ambient temperature grinding, the glycerol mixture can either be diluted with water or heated to reduce the viscosity. Dilution with water would also assist in enhancing the thermal conductivity parameter and decrease the cost per litre of applied cutting fluid.

The choline chloride urea deep eutectic mixture is highly viscous under normal conditions, as such it may not be directly applicable to a flood-cooling based process. Its viscosity may be assistive for certain processes, for example lubricant retention in textured tooling for enhanced lubrication properties. Choline chloride mixed with citric acid is solid under ambient conditions, however this could be applied towards an unconventional tooling approach for use in-situ, where the use of liquid cutting media may be impractical or prohibited. The media may be applied to the workpiece surface or impregnated into the tooling prior to use, wherein frictional heating liquefies the mixture aiding lubrication, heat transfer and debris/chip clearance and containing debris within the mixture upon solidification after processing. These applications are enabled by the versatility of deep eutectic solvent physical properties.

For phase chance coolants a mixture is chosen that has a solid-phase area of mixed DES and eutectic temperature slightly higher than room temperature, meaning this DES will retain the solid-phase until processing. This may for example be 5 °C higher, or 10 °C, or 15 °C or 20 °C or 25 °C higher than room temperature (20 °C to 22 °C) or any suitable value between. When the temperature increases beyond the melting point (e.g. machining process temperatures), it will melt and absorb heat because of high molar heat capacity and potential latent heat capacity associated with melting. This will allow significant advances for machining in areas where it is difficult or impossible to implement conventional liquid coolants, e.g. in-situ machining or repairing, such as on-wing application. In addition, the DES could have additional lubrication and anti-corrosion characteristics.

For the purpose of working on subtractive machining processes one key physical property is the melting point. In this case it is desirable that the melting point should be above the ambient room temperature. For example, the phase change coolant material may have a melting point of below 60 °C. Alternatively, the phase change coolant can have a melting point of below 50 °C. Alternatively, the phase change coolant can have a melting point of below 40 °C.

Although the description the process has been described in terms of Grinding and drilling the process can be used for all other chip-forming machining processes, such as milling, broaching, turning, hobbing etc

## Claims

1. A coolant for a subtractive machine process, the coolant comprising a phase change material which changes from a solid state to a liquid state as a result of frictional heat generated during the subtractive machine process of the machine tool on a component to be machined, and returns to the solid state as the component cools.

2. The coolant as claimed in claim 1, wherein the coolant is a deep eutectic solvent.

3. The coolant as claimed in claim 2, wherein the deep eutectic solvent has a formula Cat⁺X⁻ zY, where Cat+ is a hydrogen bond acceptor (HBA) cation, X⁻ is the corresponding halide anion and Y represents anion - interacting molecules.

4. The coolant as claimed in claim 3, wherein the coolant further comprises a hydrogen bond donor (HBD) is choline chloride.

5. The coolant as claimed in claim 3 or 4, wherein the hydrogen bond acceptor is chosen from one of ethylene glycol, glycerine, urea, or citric acid.

6. The coolant as claimed in any one of claims 2 to 5, wherein the coolant is diluted with water.

7. The coolant as claimed in any preceding claim, wherein the coolant has a melting point from 5 °C to 25 °C above room temperature.

8. The coolant as claimed in any one of claims 1 to 7, wherein sub-zero temperature processing is used on the component.

9. A method of cooling a tool and/or a component during a subtractive machining process, the method comprising: inserting a component to be machined into a clamp associated with the tool; and applying a deep eutectic solvent as a coolant to the tool and/or the component prior to the start of the reduction machining process or during the reduction machining process.

10. The method of cooling a tool and/or component as claimed in claim 9, wherein the deep eutectic solvent melted or shed during the subtractive machining process is collected during and after the subtractive machining process, the collected deep eutectic solvent is recycled by addition of a solvent to decrease the viscosity so that any debris from the machining process is separated before being heated to evaporate the solvent.

11. The method of cooling a tool and/or component as claimed in any one of claims 9 to 10, wherein the deep eutectic solvent has a formula Cat⁺X⁻zY, where Cat+ is a hydrogen bond acceptor (HBA) cation, X⁻ is a corresponding halide anion and Y represents anion - interacting molecules.

12. The method of cooling a tool and/or component as claimed in claim 11, wherein a hydrogen bond donor (HBD) is choline chloride.

13. The method of cooling a tool and/or component as claimed in claim 11 or 12, wherein the hydrogen bond acceptor (HBA) is ethylene glycol, glycerine, urea, or citric acid.
